# EUROPEAN PATENT SPECIFICATION

(11) **EP 3 249 313 B1**
(45) Date of publication and mention of the grant of the patent: **04.11.2020**
(21) Application number: 17179807.7
(22) Date of filing: 08.09.2014
(51) Int. Cl.: F24F 13/24, F01N 1/00, F16L 55/033, F24F 12/00

(54) **SILENCER FOR HEAT RECOVERY VENTILATION UNIT**
SCHALLDÄMPFER FÜR EINE LÜFTUNGSEINHEIT MIT WÄRMERÜCKGEWINNUNG
SILENCIEUX POUR UNITÉ DE VENTILATION À RÉCUPÉRATION DE CHALEUR

(30) Priority: 06.09.2013 EP 13004368
(43) Date of publication of application: 29.11.2017
(62) Divisional of application: 14787251.9
(73) Proprietor: Zehnder Group International AG, 5722 Gränichen (CH)
(72) Inventor: BERTHOLD, David, 8645 Jona (CH); ARENDS, Eric, 8011 HK Zwolle (NL); WALTA, Remco, 8341 RW Steenwijkerwold (NL)
(74) Representative: Rentsch Partner AG

(56) References cited:
- EP-A1- 2 642 215
- EP-A2- 0 801 275
- DE-A1- 19 844 578
- GB-A- 1 554 915

## Description

The present invention relates to a silencer for a heat recovery ventilation unit (HRV). A HRV unit provides supply air, preferably outside air or fresh air, to an apartment or parts thereof and removes return air, preferably exhaust air or used air, from said apartment or parts thereof.

A silencer in accordance with the preamble of claim 1 is known from EP 2 642 215 A1.

Heat recovery ventilation units have been used for many years in ventilation systems to recover heat from exhaust air exiting a house or an apartment to the surrounding atmosphere. A heat exchanger is used to transfer heat from the exhaust air exiting the house or the apartment to the outside air entering the house or the apartment. Such ventilation systems comprise an arrangement of ducts for transporting air between selected rooms of an apartment (or house) and the surrounding atmosphere. More precisely, such heat recovery ventilation systems comprise ducts collecting return air (used air) from the rooms, ducts for distributing supply air (fresh air) to the rooms on the one hand, and ducts for transporting exhaust air from the apartment to the atmosphere and ducts for transporting outside air from the atmosphere to the apartment. A heat recovery ventilation unit is located at a crossing point at which the ducts of these four air types meet. Consequently, such heat recovery ventilation units typically comprise some passive elements such as a supply air outlet, a return air inlet, an exhaust air outlet, an outside air inlet and a heat exchanger inside the unit, as well as some active elements such as a first ventilator (fan) at a first location within the ventilation unit, for transporting air through a first air flow path starting at the return air inlet, passing through first air flow passages in the heat exchanger and ending at the exhaust air outlet, and a second ventilator (fan) at a second location within the ventilation unit, for transporting air through a second air flow path starting at the outside air inlet, passing through second air flow passages and ending at the supply air outlet.

In operation, with air flows passing through these elements of a HRV unit, all of these elements, as a function of their geometric design and/or their mode of operation, contribute to a higher or lesser degree to the overall noise generation of the HRV unit. Typically, such noise results from air flow noise in the ducts and from rotating ventilator blades in the unit. Such noise may be quite annoying to the persons living in the HRV unit equipped apartment and reduces the overall benefit and acceptance of heat recovery ventilation.

In order to reduce the noise level within the HRV unit equipped apartment, it is common practice to install silencers at some of the above-mentioned air inlets and outlets. However, it has turned out to be impossible to achieve a close to total elimination of such noise with reasonably sized silencers.

It is an object of the invention to provide a silencer for a HRV unit which, on the one hand, is reasonably sized and which, on the other hand, still provides a significant absorption of all kinds of noise originating in the HRV unit.

This object is achieved by a silencer unit, according to claim 1.

According to the invention, the silencer unit comprises separate silencer ducts to be connected to said supply air outlet, return air inlet, exhaust air outlet and outside air inlet, respectively, of the heat recovery ventilation unit.

The silencer unit according to the invention provides a silencer duct for each of the air inlets and air outlets of the corresponding HRV unit. As a result, a significant reduction of the noise originating from the HRV unit in operation can be achieved.

Preferably, the silencer unit with all its silencer ducts is formed as a one-piece element from a sound-absorbing material. Such sound absorbing material may be a foamed polymer material such as a foamed thermoplastic material, or it may be a foamed elastomeric material. The one-piece silencer unit may be formed in a one-step foaming process within a mold.

In a preferred embodiment of the invention, one or two of the four air inlets and air outlets of the HRV unit have a shape differing from the shape of the other air inlets and air outlets of the HRV unit, and the silencer ducts of the silencer unit have duct ends corresponding in shape to the shapes of the air inlets and air outlets of the HRV unit. Thus, there is only one position of the silencer unit with respect to the HRV unit that allows the silencer unit to be connected to the HRV unit. As a result, there is no risk for the silencer unit to be connected in a wrong way to the HRV unit.

In a further preferred embodiment, the air inlets and air outlets of the HRV unit are located on one side, preferably the upper side, of the HRV unit substantially in a planar arrangement within a plane defined by said one side of the HRV unit, said planar arrangement of air inlets and air outlets being rotationally asymmetric with respect to rotation of said arrangement around an axis of rotation normal to said plane, and wherein the silencer ducts of the silencer unit have duct ends arranged in a substantially planar arrangement corresponding to the planar arrangement of the air inlets and air outlets of the HRV unit. Again, there is only one position of the silencer unit with respect to the HRV unit that allows the silencer unit to be connected to the HRV unit. As a result, there is no risk for the silencer unit to be connected in a wrong way to the HRV unit.

All silencer ducts of the silencer unit may be straight ducts. A silencer unit with only straight ducts can be easily manufactured.

In a further preferred embodiment, the silencer duct for the supply air outlet of the HRV unit and the silencer duct for the return air inlet of the HRV unit are curved ducts each comprising at least one bend. Curving the ducts increases their sound absorption capacity but also their resistance against air flow through the ducts. As most of the ventilation related noise in the apartment or parts thereof originates from the supply air outlet of the HRV unit and from the return air inlet of the HRV unit, providing extra sound absorption for these two openings of the HRV unit at the expense of more air flow resistance is very effective. The silencer ducts for the exhaust air outlet and the outside air inlet of the HRV unit may be straight ducts having less sound absorption but also less air flow resistance. This is a good trade-off between maximizing overall sound absorption and minimizing additional air flow resistance due to the silencer unit.

Preferably, the silencer duct for the supply air outlet of the HRV unit and the silencer duct for the return air inlet of the HRV unit are curved ducts each comprising a first bend and a second bend arranged in series, with the first bend being curved in a first direction and the second bend being curved in a second direction. This S-shaped duct provides very good sound absorption to the air inlet or air outlet of the HRV unit to which it is connected. Preferably, the S-shaped silencer duct does not have any abrupt changes in curvature along its duct length, i.e. the derivative of the S-shaped curve does not have any discontinuities.

Preferably, the first bend is curved in a first direction and the second bend is curved in a second direction opposite to the first direction. This provides increased sound absorption due to the bends while still maintaining a substantially straight overall silencer duct geometry.

According to the invention, the silencer ducts to be connected to the supply air outlet and the return air inlet of the HRV unit have a rectangular cross section along their entire duct length. Alternatively, the silencer ducts to be connected to the supply air outlet and the return air inlet of the HRV unit have a rectangular cross section along their duct length and a circular cross section at their duct ends to be connected to the HRV unit, with a step free rectangular-to circular cross section transition region extending between the region of rectangular cross section and the region of circular cross section.

Preferably, the sound absorbing material includes a fire-retardant and/or a biocidal coating. The sound absorbing material may be a foamed material with open or closed pores. The inner silencer duct walls may be coated or covered with a smooth hygienic coating.

Preferably, at least one, and preferably all, of the silencer ducts comprise a first shaped part and a second shaped part arranged in spaced relationship with respect to each other to form the respective silencer duct between the first shaped part and the second shaped part.

Preferably, the first shaped part and the second shaped part are identical in shape.

Preferably, the shaped parts are made from a porous open cell material such as foamed melamine resin, wherein the first shaped part has a first duct delimiting surface and the shaped part has a second duct delimiting surface facing the first duct delimiting surface.

In a preferred embodiment, the duct delimiting surface of each of the shaped parts has a longitudinal profile P(x) extending between an upstream duct end xᵢₙ and a downstream duct end xₒᵤₜ of a silencer duct, said longitudinal profile P(x) having consecutive profile sections of varying slope dP/dx with respect to a straight reference line extending between a center point of the upstream duct end xᵢₙ and a center point of the downstream duct end xₒᵤₜ.

These profile sections are defined by:
a first profile section having a substantially constant positive slope of 25 to 45°, preferably 28 to 42°;
a second profile section substantially defined by a convex arc section varying in slope between a maximum positive slope of 25 to 45°, preferably 28 to 42°, and a minimum negative slope of 15 to 35°, preferably 18 to 32°;
a third profile section having a substantially constant negative slope of 15 to 35°, preferably 18 to 32°;
a fourth profile section substantially defined by a concave arc section varying in slope between a minimum negative slope of 15 to 35°, preferably 18 to 32°, and a maximum positive slope of 15 to 35°, preferably 18 to 32°;
a fifth profile section substantially defined by a convex arc section varying in slope between a maximum positive slope of 15 to 35°, preferably 18 to 32°, and a minimum negative slope of 12 to 22°, preferably 15 to 20°; and
a sixth profile section having a substantially constant negative slope of 12 to 22°, preferably 15 to 20°.

Preferably, the first profile section has a first sub-section and a second sub-section downstream of the first sub-section, where the positive slope of the second sub-section is smaller than the positive slope of the first subsection.

Preferably, an intermediate profile section is provided between the fourth profile section and the fifth profile section, whit the intermediate profile having a positive slope of 15 to 35°, preferably 18 to 32°.

### Brief description of the drawings

Fig. 1 is a perspective view of an embodiment of the silencer unit according to the invention.
Fig. 2 is a top view of the silencer unit of Fig. 1.
Fig. 3 is a front view of the silencer unit of Fig. 1.
Fig. 4 is a cross section along plane A-A of Fig. 3.
Fig. 5 is a cross section along plane D-D of Fig. 2.
Fig. 6 is a cross section along plane F-F of Fig. 2.
Fig. 7 is a perspective view of two identical shaped parts used in the silencer unit of the invention.

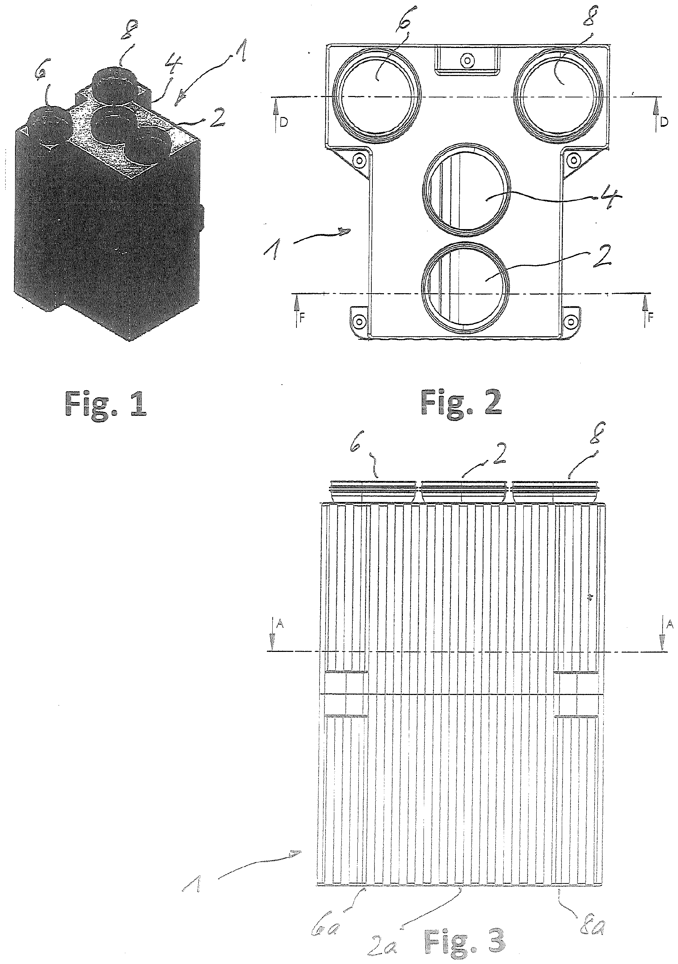

Fig. 1 is a perspective view of an embodiment of the silencer unit 1 showing a silencer ducts 2, 4, 6, 8 to be connected to a supply air outlet, return air inlet, exhaust air outlet and outside air inlet, respectively, of a heat recovery ventilation unit (not shown).
Fig. 2 is a top view of the silencer unit 1 again showing the silencer ducts 2, 4, 6, 8.
Fig. 3 is a front view of the silencer unit 1 again showing the silencer ducts 2, 6, 8 and the duct ends 2a, 6a, 8a. The silencer duct 4 and the duct end 4a are hidden behind the silencer duct 2 and the duct end 2a.

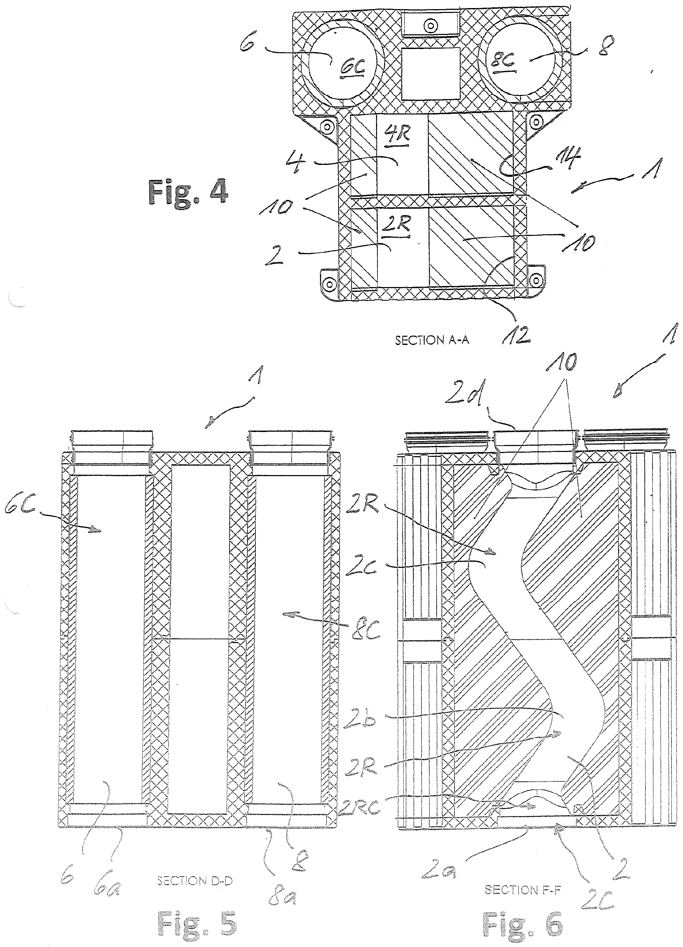

Fig. 4 is a cross section along plane A-A of Fig. 3 showing rectangular duct cross sections 2R and 4R of silencer ducts 2 and 4, respectively, and circular duct cross sections 6C and 8C of silencer ducts 6 and 8, respectively.
Fig. 5 is a cross section along plane D-D of Fig. 2 showing silencer ducts 6 and 8 with circular cross sections 6C and 8C, respectively, and duct ends 6a and 8a, respectively.
Fig. 6 is a cross section along plane F-F of Fig. 2 showing silencer duct 2 having a first bend 2b and a second bend 2c arranged in series, with the first bend 2b being curved in a first direction and the second bend 2c being curved in a second direction opposite to the first direction. Fig. 6 also shows the silencer duct 2 with a rectangular cross section 2R along its duct length and a circular cross section 2C at its duct end 2a to be connected to the HRV unit, and with a step free rectangular-to-circular cross section transition region 2RC extending between the region of rectangular cross section and the region of circular cross section. Again, the silencer duct 4 and the duct end 4a are hidden behind the silencer duct 2 and the duct end 2a. Silencer duct 4 has a shape identical to silencer duct 2 and is arranged next to silencer duct 2.

The curved silencer duct 2 is curved such that a straight line extending from a first point within the first silencer duct opening 2a to a second point within the second silencer duct opening 2d cannot be fitted into the curved silencer duct 2. This guarantees that any sound wave originating from within the HRV unit (not shown) and entering the curved silencer duct 2 of the silencer unit 1 at whatever angle will not pass straight through the silencer duct 2. Rather, it will impinge on one of the silencer duct walls and be scattered and absorbed by the sound absorbing material.

The curved silencer duct 2 comprising at least one bend 2b, 2c is composed of a first shaped part 10 and a second shaped part 10 which, when placed next to each other, constitute said curved silencer duct 2 therebetween. Thus, even complicated silencer duct geometries which may not be easily manufactured by a single molding process, are possible with pairs of identical shaped parts 10.

As best seen in Figs. 4, 5 and 6, the silencer unit 1 has a cavity 12, 14 for receiving and locating said first shaped part 10 and said second shaped part 10 next to each other. This modular approach increases accuracy of the silencer ducts 2, 4 assembled in this manner and also helps simplify the overall manufacturing steps and reduce manufacturing cost.

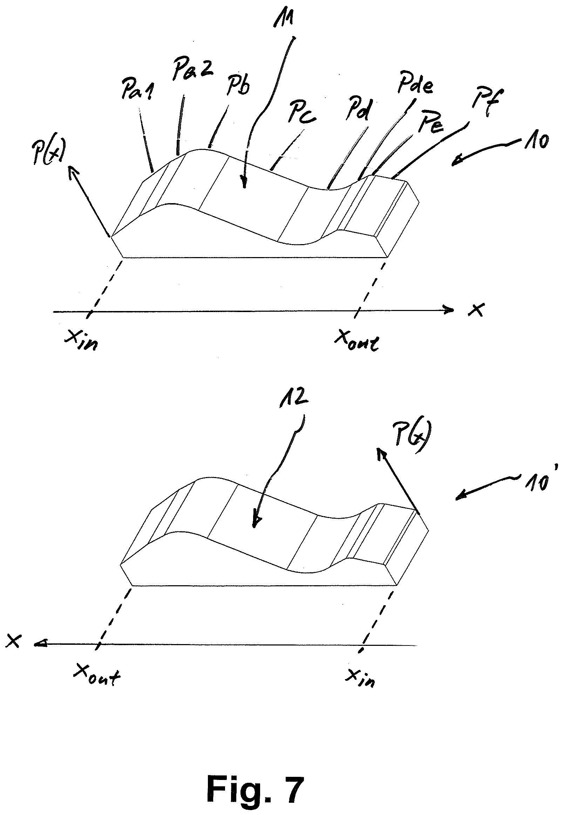

Fig. 7 is a perspective view of a shaped part 10 and an identically shaped part 10' made of melamine resin used in the silencer unit 1 of the invention. A duct delimiting surface 11, 12 of each of the shaped parts 10, 10' has a longitudinal profile P(x) extending between an upstream duct end xᵢₙ and a downstream duct end xₒᵤₜ of a silencer duct 2, 4, 6, 8. The longitudinal profile P(x) has consecutive profile sections Pa, Pb, Pc, Pd, Pe, Pf of varying slope dP/dx with respect to a straight reference line extending between a center point of the upstream duct end xᵢₙ and a center point of the downstream duct end xₒᵤₜ. The profile sections are defined by:
a first profile section Pa having a substantially constant positive slope of 28 to 42°, the first profile section Pa having a first sub-section Pa1 and a second sub-section Pa2 downstream of the first sub-section Pa1, with the positive slope of the second sub-section Pa2 being smaller than the positive slope of the first subsection Pa1; a second profile section Pb substantially defined by a convex arc section varying in slope between a maximum positive slope of 28 to 42° and a minimum negative slope 18 to 32°;
a third profile section Pc having a substantially constant negative slope of 18 to 32°; a fourth profile section Pd substantially defined by a concave arc section varying in slope between a minimum negative slope of 18 to 32° and a maximum positive slope of 18 to 32°;
a fifth profile section Pe substantially defined by a convex arc section varying in slope between a maximum positive slope of 18 to 32° and a minimum negative slope of 15 to 20°; and
a sixth profile section Pf having a substantially constant negative slope of 15 to 20°, an intermediate profile section Pde being provided between the fourth profile section Pd and the fifth profile section Pe, the intermediate profile Pde having a positive slope of 18 to 32°.

In a silencer duct 2, 4, 6, 8 of the silencer unit 1 of the invention, the second shaped part 10' is turned by 180° and in close relationship with the first shaped part 10 such that the duct delimiting surface 11 of the first shaped part 10 and the duct delimiting surface of the second shaped part 10' face each other, thus defining the a duct 2, 4, 6, 8 therebetween.

## Claims

1. A silencer unit (1) for a heat recovery ventilation (HRV) unit for providing supply air, preferably outside air (fresh air), to an apartment or parts thereof and for removing return air, preferably exhaust air (used air), from said apartment or parts thereof,
the heat recovery ventilation unit comprising:
a supply air outlet for establishing supply air flow communication with said apartment;
a return air inlet for establishing return air flow communication with said apartment;
an exhaust air outlet for establishing exhaust air flow communication with the atmosphere;
an outside air inlet for establishing outside air flow communication with the atmosphere,
wherein the silencer unit (1) is be connected to air inlets and air outlets of the heat recovery ventilation unit, wherein
the silencer unit (1) comprises separate silencer ducts (2, 4, 6, 8) to be connected to said supply air outlet, return air inlet, exhaust air outlet and outside air inlet, respectively, of the heat recovery ventilation unit,
**characterized in that** the silencer ducts (2, 4) to be connected to the supply air outlet and the return air inlet of the HRV unit have a rectangular cross section (2R, 4R) along their entire duct length.

2. The silencer unit as defined in claim 1, wherein the silencer unit with all its silencer ducts is formed as a one-piece element from a sound-absorbing material.

3. The silencer unit as defined in claim 2, wherein one or two of the four air inlets and air outlets of the HRV unit have a shape differing from the shape of the other air inlets and air outlets of the HRV unit, and wherein the silencer ducts of the silencer unit have duct ends corresponding in shape to the shapes of the air inlets and air outlets of the HRV unit.

4. The silencer unit as defined in claim 2 or 3, wherein the air inlets and air outlets of the HRV unit are located on one side, preferably the upper side, of the HRV unit substantially in a planar arrangement within a plane defined by said one side of the HRV unit, said planar arrangement of air inlets and air outlets being rotationally asymmetric with respect to rotation of said arrangement around an axis of rotation normal to said plane, and wherein the silencer ducts (2, 4, 6, 8) of the silencer unit (1) have duct ends (2a, 4a, 6a, 8a) arranged in a substantially planar arrangement corresponding to the planar arrangement of the air inlets and air outlets of the HRV unit.

5. The silencer unit as defined in any one of claims 1 to 4, wherein all silencer ducts are straight ducts.

6. The silencer unit as defined in any one of claims 1 to 4, wherein the silencer duct (2) for the supply air outlet of the HRV unit and the silencer duct (4) for the return air inlet of the HRV unit are curved ducts (2, 4) each comprising at least one bend (2b, 4b).

7. The silencer unit as defined in claim 6, wherein the silencer duct (2) for the supply air outlet of the HRV unit and the silencer duct (4) for the return air inlet of the HRV unit are curved ducts each comprising a first bend (2b, 4b) and a second bend (2c, 4c) arranged in series, with the first bend (2b, 4b) being curved in a first direction and the second bend (2c, 4c) being curved in a second direction.

8. The silencer unit as defined in claim 7, wherein the first bend (2b, 4b) is curved in a first direction and the second bend (2c, 4c) is curved in a second direction opposite to the first direction.

9. The silencer unit as defined in any one of claims 1 to 8, wherein the silencer ducts (2, 4) to be connected to the supply air outlet and the return air inlet of the HRV unit have a circular cross section (2C, 4C) at their duct ends (2a, 4a) to be connected to the HRV unit, with a step free rectangular-to-circular cross section transition region (2RC, 4RC) extending between the region of rectangular cross section and the region of circular cross section.

10. The silencer unit as defined in any one of claims 8 or 9, wherein at least one, and preferably all, of the silencer ducts (2, 4, 6, 8) comprise a first shaped part (10) and a second shaped part (10) arranged in spaced relationship with respect to each other to form the respective silencer duct (2, 4, 6, 8) between the first shaped part (10) and the second shaped part (10).

11. The silencer unit as defined in claim 10, wherein the first shaped part (10) and the second shaped part (10) are identical in shape and/or wherein the shaped parts (10, 10') are made from a porous open cell material and the first shaped part (10) has a first duct delimiting surface (11) and the shaped part (10') has a second duct delimiting surface (12) facing the first duct delimiting surface (11).

12. The silencer unit as defined in claim 11, wherein the duct delimiting surface (11, 12) of each of the shaped parts (10, 10') has a longitudinal profile P(x) extending between an upstream duct end (xᵢₙ) and a downstream duct end (xₒᵤₜ) of a silencer duct (2, 4, 6, 8), said longitudinal profile P(x) having consecutive profile sections (Pa, Pb, Pc, Pd, Pe, Pf) of varying slope dP/dx with respect to a straight reference line extending between a center point of the upstream duct end (xᵢₙ) and a center point of the downstream duct end (xout), said profile sections being defined by:
a first profile section (Pa) having a substantially constant positive slope of 25 to 45°, preferably 28 to 42°;
a second profile section (Pb) substantially defined by a convex arc section varying in slope between a maximum positive slope of 25 to 45°, preferably 28 to 42°, and a minimum negative slope of 15 to 35°, preferably 18 to 32°;
a third profile section (Pc) having a substantially constant negative slope of 15 to 35°, preferably 18 to 32°;
a fourth profile section (Pd) substantially defined by a concave arc section varying in slope between a minimum negative slope of 15 to 35°, preferably 18 to 32°, and a maximum positive slope of 15 to 35°, preferably 18 to 32°;
a fifth profile section (Pe) substantially defined by a convex arc section varying in slope between a maximum positive slope of 15 to 35°, preferably 18 to 32°, and a minimum negative slope of 12 to 22°, preferably 15 to 20°; and
a sixth profile section (Pf) having a substantially constant negative slope of 12 to 22°, preferably 15 to 20°.

13. The silencer unit as defined in claim 12, wherein said first profile section (Pa) has a first sub-section (Pa1) and a second sub-section (Pa2) downstream of said first sub-section (Pa1), the positive slope of said second sub-section (Pa2) being smaller than the positive slope of said first subsection (Pa1).

14. The silencer unit as defined in claim 12 or 13, wherein an intermediate profile section (Pde) is provided between said fourth profile section (Pd) and said fifth profile section (Pe), said intermediate profile (Pde) having a positive slope of 15 to 35°, preferably 18 to 32°.

## Patentansprüche

1. Schalldämpfereinheit (1) für eine Wärmerückgewinnungs-Belüftungseinheit (HRV) zur Bereitstellung von Versorgungsluft, bevorzugt Außenluft (Frischluft), für ein Apartment oder Teile davon und für eine Abführung von Rückluft, bevorzugt Abluft (benutzte Luft), von dem Apartment oder Teilen davon,
wobei die Wärmerückgewinnungs-Belüftungseinheit umfasst:
einen Versorgungsluftauslass zur Bereitstellung einer Versorgungsluft-Strömungsverbindung mit dem Apartment;
einen Rückluft-Einlass zur Bereitstellung einer Rückluft-Strömungsverbindung mit dem Apartment;
einen Abluft-Auslass zur Bereitstellung einer Abluft-Strömungsverbindung mit der Atmosphäre;
einen Umgebungsluft-Einlass zur Bereitstellung einer Umgebungsluft-Strömungsverbindung mit der Atmosphäre,
wobei die Schalldämpfereinheit (1) mit Lufteinlässen und Luftauslässen der Wärmerückgewinnungs-Belüftungseinheit verbunden ist, wobei die Schalldämpfereinheit (1) separate Dämpferkanäle (2, 4, 6, 8) zur jeweiligen Verbindung mit dem Versorgungsluft-Auslass, dem Rückluft-Einlass, dem Abluft-Auslass und dem Umgebungsluft-Einlass der Wärmerückgewinnungs-Belüftungseinheit aufweist,
**dadurch gekennzeichnet, dass** die Dämpferkanäle (2, 4), die mit dem Versorgungsluft-Auslass und dem Rückluft-Einlass der HRV-Einheit zu verbinden sind, rechtwinkelige Querschnitte (2R, 4R) entlang ihrer gesamten Kanallänge aufweisen.

2. Schalldämpfereinheit nach Anspruch 1, wobei die Schalldämpfereinheit mit all ihren Dämpferkanälen als ein einstückiges Element aus einem schallabsorbierenden Material gebildet ist.

3. Schalldämpfereinheit nach Anspruch 1, wobei einer oder zwei der vier Lufteinlässe und Luftauslässe der HRV-Einheit eine Gestalt aufweist, die sich von der Gestalt der anderen Lufteinlässe und der anderen Luftauslässe der HRV-Einheit unterscheidet, und wobei die Dämpferkanäle der Schalldämpfereinheit Kanalenden aufweisen, die in der Gestalt, die in ihrer Gestalt mit der Gestalt der Lufteinlässe und der Luftauslässe der HRV-Einheit korrespondieren.

4. Schalldämpfereinheit nach Anspruch 2 oder 3, wobei die Lufteinlässe und die Luftauslässe der HRV-Einheit auf einer Seite, vorzugsweise der oberen Seite, der HRV-Einheit in einer im wesentlichen ebenen Anordnung mit einer Ebene, die durch diese Seite der HRV-Einheit definiert ist, angeordnet sind, wobei die ebene Anordnung der Lufteinlässe und Luftauslässe in Bezug auf eine Drehung der Anordnung um eine Drehachse, die zu der Ebene senkrecht ist, rotationsasymmetrisch sind, und wobei die Dämpferkanäle (2, 4, 6, 8) der Schalldämpfereinheit (1) Kanalenden (2a, 4a, 6a, 8a) haben, die in einer im wesentlichen ebenen Anordnung entsprechend der ebenen Anordnung der Lufteinlässe und der Luftauslässe der HRV-Einheit angeordnet sind.

5. Schalldämpfereinheit nach einem der Ansprüche 1 bis 3, wobei alle Dämpferkanäle geradlinige Kanäle sind.

6. Schalldämpfereinheit nach einem der Ansprüche 1 bis 4, wobei oder Dämpferkanal (2) für den Versorgungsluft-Auslass der HRV-Einheit und der Dämpferkanal (4) für den Rückluft-Einlass der HRV-Einheit gekrümmte Kanäle (2, 4) haben, wobei jeder mindestens eine Krümmung (2b, 4b) umfasst.

7. Schalldämpfereinheit nach Anspruch 6, wobei der Dämpferkanal (2) für den Versorgungsluft-Auslass der HRV-Einheit und der Dämpferkanal (4) für den Rückluft-Einlass der HRV-Einheit gekrümmte Kanäle sind, wobei jeder eine erste Krümmung (2b, 4b) und eine zweite Krümmung (2c, 4c) aufweist, die in Reihe angeordnet sind, wobei die erste Krümmung (2b, 4b) in einer ersten Richtung und die zweite Krümmung (2c, 4c) in einer zweiten Richtung gekrümmt sind.

8. Schalldämpfereinheit nach Anspruch 7, wobei die erste Krümmung (2b, 4b) in einer ersten Richtung und die zweite Krümmung (2c, 4c) in einer zweiten Richtung gekrümmt ist, die zur der ersten Richtung entgegengesetzt ist.

9. Schalldämpfereinheit nach einem der Ansprüche 1 bis 8, wobei die Dämpferkanäle (2, 4), die mit dem Versorgungsluft-Auslass und dem Rückluft-Einlass der HRV-Einheit zu verbinden sind, einen rechteckigen Querschnitt (2R, 4R) entlang ihrer Kanallänge und einen kreisförmigen Querschnitt (2C, 4C) an ihren Kanalenden (2a, 4a) aufweisen, die zur Verbindung mit der HRV-Einheit vorgesehen sind, wobei sie einen stufenlosen rechteckig-zu-kreisförmig Querschnittsübergangsabschnitt (2RC, 4RC) aufweisen, der sich zwischen dem Abschnitt mit dem rechteckigen Querschnitt und dem Abschnitt mit dem kreisförmigen Querschnitt erstreckt.

10. Schalldämpfereinheit nach einem der Ansprüche 8 oder 9, wobei mindestens ein, vorzugsweise alle, Dämpferkanäle (2, 4, 6, 8) einen ersten geformten Teil (10) und einen zweiten geformten Teil (10) aufweisen, die in einer beabstandeten Relation zueinander angeordnet sind, um den jeweiligen Dämpferkanal (2, 4, 6, 8) zwischen dem ersten geformten Teil (10) und dem zweiten geformten Teil (10) zu bilden.

11. Schalldämpfereinheit nach Anspruch 10, wobei der erste geformte Teil (10) und der zweite geformte Teil (10) in ihrer Form identisch sind und/oder wobei die geformten Teile (10, 10') aus einem porösen offenen Zellmaterial hergestellt sind und der erste geformte Teil (10) eine erste kanalbegrenzende Oberfläche (11) und der geformte Teil (10') eine zweite kanalbegrenzende Oberfläche (12) aufweist, die der ersten kanalbegrenzende Oberfläche (11) gegenüberliegt.

12. Schalldämpfereinheit nach Anspruch 11, wobei die kanalbegrenzende Oberfläche (11, 12) jedes geformten Teils (10, 10') ein langgestrecktes Profil P(x) aufweist, das sich zwischen einem Stromaufwärts-Kanalende (xᵢₙ) und einem Stromabwärts-Kanalende (xₒᵤₜ) eines Dämpferkanals (2, 4, 6, 8) erstreckt, wobei das langgestreckte Profil P(x) aufeinanderfolgende Profilabschnitte (Pa, Pb, Pc, Pd, Pe, Pf) mit einer variierenden Neigung dP/dx bezüglich einer geraden Referenzlinie aufwiest, die sich zwischen einem Mittelpunkt des Stromaufwärts-Kanalendes (xᵢₙ) und einem Mittelpunkt des Stromabwärts-Kanalendes (xₒᵤₜ) erstreckt, wobei die Profilabschnitte definiert sind durch:
einen ersten Profilabschnitt (Pa), der eine im wesentlichen konstante Neigung von 25 bis 45°, bevorzugt 28 bis 42°, aufweist;
einen zweiten Profilabschnitt (Pb), im Wesentlichen definiert durch einen konvexen Bogenabschnitt, der in der Neigung zwischen einer maximalen positiven Neigung von 25 bis 45°, bevorzugt 28 bis 42°, und einer minimalen negativen Neigung von 15 bis 35°, bevorzugt 18 bis 32°, variiert;
ein dritter Profilabschnitt (Pc), der eine im Wesentlichen negative Neigung von 15 bis 35°, bevorzugt 18 bis 32°, aufweist;
einen vierten Profilabschnitt (Pd), der im Wesentlichen durch einen konkaven Bogenabschnitt definiert ist, der in seiner Neigung zwischen einer minimalen negativen Neigung von 15 bis 35°, bevorzugt 18 bis 32°, und einer positiven Neigung von 15 bis 35°, bevorzugt 18 bis 32°, variiert;
einen fünften Profilabschnitt (Pe), der im Wesentlichen durch einen konvexen Bogenabschnitt definiert ist, der in seiner Neigung zwischen einer maximalen positiven Neigung von 15 bis 35°, bevorzugt 18 bis 32°, und einer minimalen negativen Neigung von 12 bis 22°, bevorzugt 15 bis 20°, variiert; und
einen sechsten Profilabschnitt (Pf), der eine im Wesentlichen konstante negative Neigung von 12 bis 22°, bevorzugt 15 bis 20°, hat.

13. Schalldämpfereinheit nach Anspruch 12, wobei der erste Profilabschnitt (Pa) einen ersten Unterabschnitt (Pa1) und einen zweiten Unterabschnitt (Pa2) stromabwärts des ersten Unterabschnitts (Pa1) aufweist, wobei die positive Neigung des zweiten Unterabschnitts (Pa2) kleiner als die positive Neigung des ersten Unterabschnitts (Pa1) ist.

14. Schalldämpfereinheit nach Anspruch 12 oder 13, wobei ein Zwischenprofilabschnitt (Pde) zwischen dem vierten Profilabschnitt (Pd) und dem fünften Profilabschnitt (Pe) vorgesehen ist, wobei das Zwischenprofil (Pde) eine positive Neigung von 15 bis 35°, bevorzugt 18 bis 32°, aufweist.

## Revendications

1. Unité de silencieux (1) pour une unité de ventilation à récupération de chaleur (HVR) pour fournir de l'air d'apport, de préférence de l'air extérieur (l'air frais), à un appartement ou des parties de celui-ci et pour retirer l'air de retour, de préférence l'air évacué (l'air usé), dudit appartement ou desdites parties de celui-ci,
l'unité de ventilation à récupération de chaleur comprenant :
une sortie d'air d'apport pour établir une communication entre le flux d'air d'apport et ledit appartement ;
une entrée d'air de retour pour établir une communication entre le flux d'air de retour et ledit appartement ;
une sortie d'air évacué pour établir une communication entre le flux d'air évacué et l'atmosphère ;
une entrée d'air extérieur pour établir une communication entre le flux d'air extérieur et l'atmosphère,
dans laquelle l'unité de silencieux (1) est destinée à être reliée aux entrées d'air et aux sorties d'air de l'unité de ventilation à récupération de chaleur,
dans laquelle l'unité de silencieux (1) comprend des conduits de silencieux séparés (2, 4, 6, 8) à relier à ladite sortie d'air d'apport, à ladite entrée d'air de retour, à ladite sortie d'air évacué et à ladite entrée d'air extérieur, respectivement, de l'unité de ventilation à récupération de chaleur,
**caractérisée en ce que** les conduits de silencieux (2, 4) à relier à la sortie d'air d'apport et à l'entrée d'air de retour de l'unité HRV ont une section transversale rectangulaire (2R, 4R) sur toute leur longueur de conduit.

2. Unité de silencieux telle que définie dans la revendication 1, dans laquelle l'unité de silencieux avec tous ses conduits de silencieux est formée comme un élément monobloc à partir d'un matériau absorbant le son.

3. Unité de silencieux telle que définie dans la revendication 2, dans laquelle une ou deux des quatre entrées d'air et sorties d'air de l'unité HRV a/ont une forme différente de la forme des autres entrées d'air et sorties d'air de l'unité HRV, et dans laquelle les conduits de silencieux de l'unité de silencieux ont des extrémités de conduit dont les formes correspondent aux formes des entrées d'air et sorties d'air de l'unité HRV.

4. Unité de silencieux telle que définie dans la revendication 2 ou 3, dans laquelle les entrées d'air et les sorties d'air de l'unité HRV sont situées sur un premier côté, de préférence le côté supérieur, de l'unité HRV essentiellement dans un agencement planaire à l'intérieur d'un plan défini par ledit premier côté de l'unité HRV, ledit agencement planaire des entrées d'air et des sorties d'air étant asymétrique en rotation par rapport à la rotation dudit agencement autour d'un axe de rotation normal audit plan, et dans laquelle les conduits de silencieux (2, 4, 6, 8) de l'unité de silencieux (1) ont des extrémités de conduit (2a, 4a, 6a, 8a) agencées dans un agencement essentiellement planaire correspondant à l'agencement planaire des entrées d'air et des sorties d'air de l'unité HRV.

5. Unité de silencieux telle que définie dans l'une quelconque des revendications 1 à 4, dans laquelle tous les conduits de silencieux sont des conduits droits.

6. Unité de silencieux telle que définie dans l'une quelconque des revendications 1 à 4, dans laquelle le conduit de silencieux (2) pour la sortie d'air d'apport de l'unité HRV et le conduit de silencieux (4) pour l'entrée d'air de retour de l'unité HRV sont des conduits incurvés (2, 4) comprenant chacun au moins un coude (2b, 4b).

7. Unité de silencieux telle que définie dans la revendication 6, **caractérisée en ce que** le conduit de silencieux (2) pour la sortie d'air d'apport de l'unité HRV et le conduit de silencieux (4) pour l'entrée d'air de retour de l'unité HRV sont des conduits incurvés comprenant chacun un premier coude (2b, 4b) et un deuxième coude (2c, 4c) agencés en série, le premier coude (2b, 4b) étant incurvé dans une première direction et le deuxième coude (2c, 4c) étant incurvé dans une deuxième direction.

8. Unité de silencieux telle que définie dans la revendication 7, dans laquelle le premier coude (2b, 4b) est incurvé dans une première direction et le deuxième coude (2c, 4c) est incurvé dans une deuxième direction opposée à la première direction.

9. Unité de silencieux telle que définie dans l'une quelconque des revendications 1 à 8, dans laquelle les conduits de silencieux (2, 4) à relier à la sortie d'air d'apport et à l'entrée d'air de retour de l'unité HRV ont une section transversale circulaire (2C, 4C) au niveau de leurs extrémités de conduit (2a, 4a) à relier à l'unité HRV, avec une région de transition de section transversale rectangulaire à circulaire sans gradins (2RC, 4RC) s'étend entre la région de section transversale rectangulaire et la région de section transversale circulaire.

10. Unité de silencieux telle que définie dans l'une quelconque des revendications 8 ou 9, dans laquelle au moins un, et de préférence l'ensemble, des conduits de silencieux (2, 4, 6, 8) comprend une première partie façonnée (10) et une deuxième partie façonnée (10') agencées dans une relation espacée l'une par rapport à l'autre pour former le conduit de silencieux respectif (2, 4, 6, 8) entre la première partie façonnée (10) et la deuxième partie façonnée (10').

11. Unité de silencieux telle que définie dans la revendication 10, dans laquelle la première partie façonnée (10) et la deuxième partie façonnée (10') sont de forme identique et/ou dans laquelle les parties façonnées (10, 10') sont réalisées en un matériau poreux à cellules ouvertes et la première partie façonnée (10) a une première surface de délimitation de conduit (11) et la partie façonnée (10') a une deuxième surface de délimitation de conduit (12) faisant face à la première surface de délimitation de conduit (11).

12. Unité de silencieux telle que définie dans la revendication 11, dans laquelle la surface de délimitation de conduit (11, 12) de chacune des parties façonnées (10, 10') a un profil longitudinal P(x) s'étendant entre une extrémité de conduit amont (xᵢₙ) et une extrémité de conduit aval (xₒᵤₜ) d'un conduit de silencieux (2, 4, 6, 8), ledit profil longitudinal P(x) ayant des sections de profil consécutives (Pa, Pb, Pc, Pd, Pe, Pf) de pente variable dP/dx par rapport à une ligne droite de référence s'étendant entre un point central de l'extrémité de conduit amont (xᵢₙ) et un point central de l'extrémité de conduit aval (xₒᵤₜ), lesdites sections de profil étant définies par :
une première section de profil (Pa) ayant une pente positive essentiellement constante de 25 à 45°, de préférence de 28 à 42° ;
une deuxième section de profil (Pb) essentiellement définie par une section d'arc convexe ayant une pente variable comprise entre une pente positive maximale de 25 à 45°, de préférence de 28 à 42°, et une pente négative minimale de 15 à 35°, de préférence de 18 à 32° ;
une troisième section de profil (Pc) ayant une pente négative essentiellement constante de 15 à 35°, de préférence de 18 à 32° ;
une quatrième section de profil (Pd) essentiellement définie par une section d'arc concave ayant une pente variable comprise entre une pente négative minimale de 15 à 35°, de préférence de 18 à 32°, et une pente positive maximale de 15 à 35°, de préférence de 18 à 32° ;
une cinquième section de profil (Pe) essentiellement définie par une section d'arc convexe ayant une pente variable comprise entre une pente positive maximale de 15 à 35°, de préférence de 18 à 32°, et une pente négative minimale de 12 à 22°, de préférence de 15 à 20° ; et
une sixième section de profil (Pf) ayant une pente négative essentiellement constante de 12 à 22°, de préférence de 15 à 20°.

13. Unité de silencieux telle que définie dans la revendication 12, dans laquelle ladite première section de profil (Pa) a une première sous-section (Pa1) et une deuxième sous-section (Pa2) en aval de ladite première sous-section (Pa1), la pente positive de ladite deuxième sous-section (Pa2) étant plus petite que la pente positive de ladite première sous-section (Pa1).

14. Unité de silencieux telle que définie dans la revendication 12 ou 13, dans laquelle une section de profil intermédiaire (Pde) est prévue entre ladite quatrième section de profil (Pd) et ladite cinquième section de profil (Pe), ledit profil intermédiaire (Pde) ayant une pente positive de 15 à 35°, de préférence de 18 à 32°.
